(19) Europäisches Patentamt
European Patent Office
Office européen des brevets

(11) **EP 3 051 484 A2**

(12) **EUROPEAN PATENT APPLICATION**

(43) Date of publication:
**03.08.2016 Bulletin 2016/31**

(51) Int Cl.:
*G06T 3/40* (2006.01)

(21) Application number: **15157863.0**

(22) Date of filing: **05.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **30.01.2015 CN 201510050019**

(71) Applicant: **BOE Technology Group Co., Ltd.**
**Beijing 100015 (CN)**

(72) Inventors:
• **Zhang, Lijie**
  **100176 Beijing (CN)**
• **Navarrete Michelini, Pablo**
  **100176 Beijing (CN)**
• **Duan, Ran**
  **100176 Beijing (CN)**

(74) Representative: **Klunker . Schmitt-Nilson . Hirsch**
**Patentanwälte**
**Destouchesstraße 68**
**80796 München (DE)**

(54) **Image interpolation method and image interpolation apparatus**

(57)    There is provided an image interpolation method and an image interpolation apparatus. The image interpolation method comprising: interpolating pixels of a source image with zeros to form an up-sampling image; obtaining a reference interpolation kernel using the up-sampling image; and convolving the pixels of the source image, the reference interpolation kernel and a directional shift coefficient matrix to perform reference kernel interpolation based on directional shift on the source image. According to the image interpolation method and the image interpolation apparatus, based on the inclined bi-cubic interpolation, a directional shift matrix is introduced to remain the reference interpolation kernel unchanged while transforming the shift convolution matrix based on the direction, which is advantageous to optimize the interpolated image in various directions, such that continuity of the image content is considered and distortion is avoided at high frequency parts such as the edges or detail parts of the image.

Fig.2

**Description**

TECHNICAL FIELD

The present disclosure relates to the field of image processing, and to an image interpolation method and an image interpolation apparatus.

BACKGROUND

In the image processing field, image interpolation is a common image processing method. In short, image interpolation is to generate gray level values of unknown pixels by using gray level values of adjacent known pixels in order to generate an image with higher resolution from the original image. The normal image interpolation methods emphasize more on smoothing of the image to obtain better visual effect. However, such methods usually result in edge blurring of the image while preserving smoothing of the image. The edge information of the image is an important factor influencing visual effect.

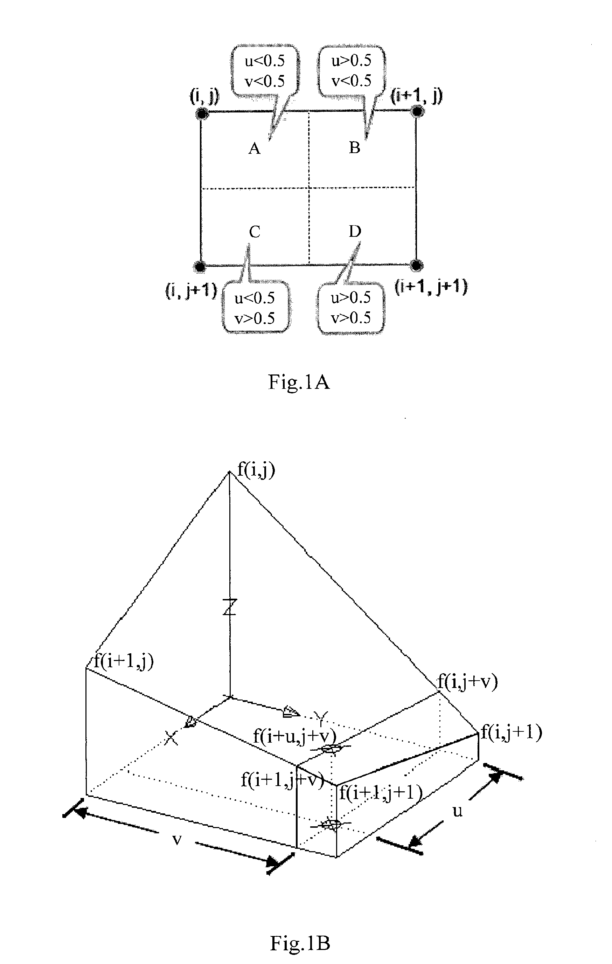

For example, as the simplest interpolation method, the nearest neighbor approach assigns the gray level value of a neighbor pixel nearest to the pixel to be interpolated among the four neighbor pixels to the pixel to be interpolated. As illustrated in Fig. 1A, assuming (i+u, j+v) is the coordinate of the pixel to be interpolated where i and j are positive integers and u and v are decimals larger than 0 and smaller than 1, then the gray level value to the pixel to be interpolated, f(i+u, j+v), can be calculated as follows. If (i+u, j+v) falls in area A, i.e., u<0.5 and v<0.5, then the gray level value of the pixel on the top left is assigned to the pixel to be interpolated; similarly, if (i+u, j+v) falls in area B, then the gray level value of the pixel on the top right is assigned to the pixel to be interpolated; if (i+u, j+v) falls in area C, then the gray level value of the pixel on the low left is assigned to the pixel to be interpolated; if (i+u, j+v) falls in area D, then the gray level value of the pixel on the low right is assigned to the pixel to be interpolated. The nearest neighbor approach is simple, requires small amount of computation and is easy to be implemented; however, this approach may cause discontinuity in gray level of the image generated by interpolation, and there may appear visible sawtooth shapes where the gray level changes.

As another image interpolation method, the bilinear interpolation approach performs linear interpolation in two directions using the gray level values of four neighbor pixels around the pixel to be interpolated. As illustrated in Fig. 1B, for pixel (i, j+v), change from the gray level value f(i, j) to f(i, j+1) is considered as being in linear relationship, so f(i, j+v) = [f(i, j+1) - f(i, j)] * v + f(i, j); similarly, for pixel (i+1, j+v), f(i+1, j+v) = [f(i+1, j+1) - f(i+1, j)] * v + f(i+1, j). Gray level value change from f(i, j+v) to f(i+1, j+v) is also considered as in linear relationship, so the computation expression of the gray level of the pixel to be interpolated can be derived as f(i+u, j+v) = (1-u) * (1-v) * f(i, j) + (1-u) * v * f(i, j+1) + u * (1-v) * f(i+1, j) + u * v * f(i+1, j-+1). The bilinear interpolation approach is more complex than the nearest neighbor approach, but has smoothing function. It can effectively overcome the drawbacks of the nearest neighbor approach, but it has low pass filter effect and may degrade high frequency part of the image, thus blurring the details of the image.

When the amplification factor is large, high order interpolation such as the normal bi-cubic interpolation approach has better effect than low order interpolation. The high order interpolation considers not only the influence of the gray level values of the surrounding four direct adjacent pixels, but also the influence of change rate of their gray level values. The bi-cubic interpolation approach performs cubic interpolation using the gray scale values of 16 pixels around the pixel to be interpolated for calculation. In particular, this approach uses a cubic polynomial S(w) to approach the theoretically best interpolation function sin(x)/x, and its mathematic expression is:

$$s(w) = \begin{cases} 1 - 2|w|^2 + |w|^3 & 0 \le |w| < 1 \\ 4 - 8|w| + 5|w|^2 - |w|^3 & 1 \le |w| < 2 \\ 0 & |w| \ge 2 \end{cases} \qquad (1)$$

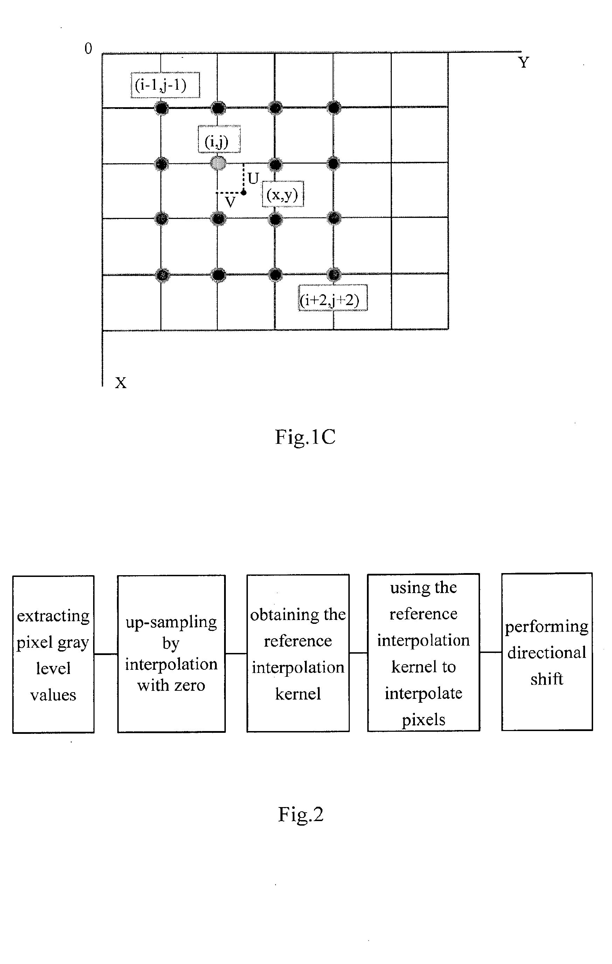

where w is the distance between the pixel to be interpolated and the source image pixel in the neighborhood, which is referred to as offset. The gray level value of the pixel (x, y) is obtained by weighted interpolation of the gray level values of the 16 pixels around it. As illustrated in Fig. 1C, the gray level value of the pixel to be interpolated is calculated as:

$$f(x, y) = f(i+u, j+v) = A * B * C \qquad (2)$$

wherein

$$A = \begin{pmatrix} S(1+v) \\ S(v) \\ S(1-v) \\ S(2-v) \end{pmatrix}^{T}$$

$$B = \begin{pmatrix} f(i-1, j-1) & f(i-1, j) & f(i-1, j+1) & f(i-1, j+2) \\ f(i, j-1) & f(i, j) & f(i, j+1) & f(i, j+2) \\ f(i+1, j-1) & f(i+1, j) & f(i+1, j+1) & f(i+1, j+2) \\ f(i+2, j-1) & f(i+2, j) & f(i+2, j+1) & f(i+2, j+2) \end{pmatrix}$$

$$C = \begin{pmatrix} S(1+u) \\ S(u) \\ S(1-u) \\ S(2-u) \end{pmatrix}$$

The normal bi-cubic interpolation approach requires large amount of computation, but has good image effect after the interpolation. It can make the image after amplification become natural and smooth, but when some pixels and their neighbor pixels in the image have gray level value discontinuity, that is, when there are object profiles or texture image edges in the original image, this approach will blur the profile and texture of the image after amplification to reduce the image quality. The main reason is that, when the normal bi-cubic interpolation approach performs interpolating convolution calculation on the image, the whole image adopts one fixed convolution kernel, i.e., the above cubic polynomial interpolation function S(w), rather than an adaptive interpolation based on the image content.

SUMMARY

In view of the above problems existing in the prior art, the inventor(s) proposes an image interpolation method and an image interpolation apparatus, which can reduce or even eliminate the distortion phenomenon easily caused by the normal image interpolation method in the high frequency areas such as object edges or detail parts of the image, and reduce computation complexity and software and hardware resources that may be occupied with ensuring the quality of the image.

According to one aspect of the present disclosure, there is provided an image interpolation method comprising: interpolating pixels of a source image with zeros to form an up-sampling image; obtaining a reference interpolation kernel using the up sampling image; and convolving the pixels of the source image, the reference interpolation kernel and a directional shift coefficient matrix to perform reference kernel interpolation based on directional shift on the source image.

According to another aspect of the present disclosure, there is provided an image interpolation method in which the reference kernel interpolation based on directional shift is only performed on the luminance component Y of the pixels of the source image, and the normal interpolation is performed on the chrominance components U, V. According to an embodiment of the present disclosure, the above image interpolation method comprises: extracting a first component of the pixels of the source image; interpolating the first component of the pixels of the source image with zeros to form the above up-sampling image; convolving the above up-sampling image with a 0/1 matrix to obtain the above reference interpolation kernel; convolving any two of the first component of the pixels of the source image, the reference interpolation kernel and the directional shift coefficient matrix to obtain an intermediate result; convolving the obtained intermediate result with the remaining one of the first component of the pixels of the source image, the reference interpolation kernel and the directional shift coefficient matrix to obtain the first component of pixels of a target image; and synthesizing the first component of the pixels of the target image with other components which are subjected to the normal interpolation to a final image.

Optionally, the first component is luminance component Y, and the other components are chrominance components UV.

Optionally, the above image interpolation method further comprises: performing YUV space conversion on the source image to separate luminance component Y from chrominance components UV so as to obtain the luminance component of the pixels of the source image.

Optionally, the above image interpolation method further comprises: determining direction of an edge existing in the source image and interpolating the pixel along the determined direction.

Optionally, in the above image interpolation method, before determining the direction of the edge, Gaussian filtering is performed on the pixels of the source image to eliminate white noise in the source image.

Optionally, the above image interpolation method further comprises: changing the direction, transforming the directional shift coefficient matrix and comparing the obtained final images to optimize the display effect.

Optionally, the above image interpolation method further comprises: decomposing the reference interpolation kernel to obtain one-dimensional horizontal interpolation kernel and vertical interpolation kernel.

Optionally, the above image interpolation method further comprises: convolving the first component of neighbor pixels of the source image around a pixel to be interpolated with the horizontal interpolation kernel and the vertical interpolation kernel respectively, and then performing angular rotation on the result in the direction in which the pixel to be interpolated is located.

Optionally, the above image interpolation method further comprises: performing angular rotation on the horizontal interpolation kernel and the vertical interpolation kernel in the direction in which a pixel to be interpolated is located, and then convolving the horizontal interpolation kernel and the vertical interpolation kernel as rotated with the first component of neighbor pixels of the source image around the pixel to be interpolated respectively.

Optionally, in the above image interpolation method, different number of neighbor pixels of the source image is selected for interpolation in the horizontal direction and the vertical direction, so as to employ different filtering intensities in the horizontal direction and the vertical direction.

Optionally, in the above image interpolation method, the normal interpolation is performed on the separated UV components, wherein the normal interpolation comprises but not limited to the nearest interpolation, the bilinear interpolation or the bi-cubic interpolation.

According to another aspect of the present disclosure, there is also provided an image interpolation apparatus. In particular, the image interpolation apparatus can comprise: an up-sampling unit for interpolating pixels of a source image with zeros to form an up-sampling image; a reference interpolation kernel obtaining unit for obtaining a reference interpolation kernel using the up-sampling image; and an interpolation unit for convolving the pixels of the source image, the reference interpolation kernel and a directional shift coefficient matrix to perform reference kernel interpolation based on directional shift on the source image.

As described in the above, considering that human eyes are more sensitive to luminance than chrominance, according to another embodiment of the present disclosure, the reference kernel interpolation based on directional shift is only performed on the luminance component Y of the pixels of the source image, and the normal interpolation is performed on the chrominance components U, V. Thereby, there is provided an image interpolation apparatus which can further comprise a component extracting unit for extracting a first component of the pixels of the source image, wherein the up-sampling unit is configured to interpolate the first component of the pixels of the source image with zeros to form the above up-sampling image; the reference interpolation kernel obtaining unit is configured to convolve the above up-sampling image with a 0/1 matrix to obtain the reference interpolation kernel; the interpolation unit is configured to convolve any two of the first component of the pixels of the source image, the reference interpolation kernel and the directional shift coefficient matrix to obtain an intermediate result, and convolve the obtained intermediate result with the remaining one of the first component of the pixels of the source image, the reference interpolation kernel and the directional shift coefficient matrix to obtain the first component of pixels of a target image; and wherein the image interpolation apparatus further comprises a synthesizing unit for synthesizing the first component of the pixels of the target image with other components which are subjected to the normal interpolation to a final image.

Optionally, the above image interpolation apparatus further comprises: a color space converting unit for performing YUV color space conversion on the source image to separate luminance component Y from chrominance components UV.

Optionally, the above image interpolation apparatus further comprises: an edge direction determining unit for determining direction of an edge existing in the source image, and interpolating the pixel along the determined direction.

Optionally, the above image interpolation apparatus further comprises: a filtering unit for performing Gaussian filtering on the pixels of the source image to eliminate white noise introduced when the source image is shot before determining the direction of the edge.

Optionally, the above image interpolation apparatus further comprises: a dimension transforming unit for decomposing the reference interpolation kernel to obtain one-dimensional horizontal interpolation kernel and vertical interpolation kernel.

Optionally, the above image interpolation apparatus further comprises: an angle rotation unit for performing angular rotation on the result obtained by convolving the first component of neighbor pixels of the source image around a pixel to be interpolated with the horizontal interpolation kernel and the vertical interpolation kernel respectively in the direction in which the pixel to be interpolated is located.

Optionally, the above image interpolation apparatus further comprises: an angle rotation unit for performing angular rotation on the horizontal interpolation kernel and the vertical interpolation kernel in the direction in which the pixel to be interpolated is located in order to convolve the horizontal interpolation kernel and the vertical interpolation kernel as rotated with the first component of neighbor pixels of the source image around the pixel to be interpolated respectively.

Optionally, the above image interpolation apparatus further comprises: a selecting unit for selecting different number of neighbor pixels of the source image for interpolation in the horizontal direction and the vertical direction, so as to employ different filtering intensities in the horizontal direction and the vertical direction.

Optionally, the above image interpolation apparatus further comprises: a direction adjusting unit for changing the direction to transform the directional shift coefficient matrix in order to obtain an optimized interpolated image.

According to the image interpolation method and the image interpolation apparatus provided by embodiments of the present disclosure, based on the inclined bi-cubic interpolation, a directional shift matrix is introduced to remain the reference interpolation kernel unchanged while transforming the shift convolution matrix based on the direction, which is advantageous to optimize the interpolated image in various directions, such that continuity of the image content is considered and distortion is avoided at high frequency parts and details such as the edges of the image. In addition, considering that human eyes are more sensitive to luminance than chrominance, according to the image interpolation method and the image interpolation apparatus provided by another embodiment of the present disclosure, the reference kernel interpolation based on directional shift can be performed only on the luminance component of the pixels of the source image, but the normal interpolation is performed on the chrominance components, reducing computation complexity and reducing the requirements on the software and hardware resource of the image processing system.

BRIEF DESCRIPTION OF THE DRAWINGS

In order to explain the technical solutions of embodiments of the present disclosure more clearly, the figures of the embodiments are briefly introduced in the following. Obviously, the figures in the following description only relate to some embodiments of the present disclosure, but not limit the scope of the present invention.

Figs. 1A-1C are schematic principle diagrams of commonly-used image interpolation methods;
Fig. 2 is an overall block diagram of an image interpolation method according to an embodiment of the present disclosure;
Fig. 3 is a block diagram for performing different interpolation algorithms on the luminance component Y and the chrominance components UV of the source image respectively according to an embodiment of the present disclosure;
Fig. 4 is a detailed block diagram for performing reference kernel interpolation based on directional shift on the Y component of the source image according to an embodiment of the present disclosure;
Fig. 5 is a schematic diagram for up-sampling and interpolating the source image with zeros according to an embodiment of the present disclosure;
Figs. 6A-6C are schematic principle diagrams illustrating various specific embodiments of bi-cubic interpolation;
Fig. 7 is an overall schematic diagram for directional interpolation according to an embodiment of the present disclosure;
Fig. 8 is a flowchart of an image interpolation method according to an embodiment of the present disclosure;
Fig. 9 is a flowchart of another image interpolation method according to an embodiment of the present disclosure;
Fig. 10 is a block diagram of an image interpolation apparatus according to an embodiment of the present disclosure; and
Fig. 11 is a block diagram of another image interpolation apparatus according to an embodiment of the present disclosure.

DETAILED DESCRIPTION

In the following, the technical solutions of embodiments of the present disclosure will be clearly and completely described in connection with the figures. Obviously, the described embodiments are only part of the embodiments of the present disclosure, but not all of them. All other embodiments obtained by those skilled in the art based on the embodiments in the present disclosure without creative work also fall in the protection scope of the present disclosure.

According to an embodiment of the present disclosure, there is provided an image interpolation method. Fig. 2 illustrates an overall block diagram of the image interpolation method. As illustrated in Fig. 2, first, gray level values of pixels of a source image are extracted, and then a reference kernel interpolation algorithm based on directional shift is performed on the pixels of the source image. In particular, the gray level values of the pixels of the source image are interpolated with zeros to form a up-sampling image, in order to obtain a reference interpolation kernel; the gray level values of the pixels of the source image are convolved with the reference interpolation kernel to obtain an intermediate image subjected to the reference kernel interpolation; and finally, directional shift is performed on the gray level values of the intermediate image to obtain a final image.

In order to simplify calculation, it is possible to extract a first component of the pixels of the source image and interpolate the first component of the pixels of the source image with zeros to form the above up-sampling image. Considering human eyes are more sensitive to luminance than chrominance, according to another embodiment of the present disclosure, the above first component can be the luminance component. The luminance component Y can be separated from the chrominance components U, V of the source image, and the reference kernel interpolation algorithm based on directional shift can be performed only on the luminance component Y so that adaptive interpolation can be performed on the luminance component to reduce or even eliminate the distortion phenomenon that may occur when normal interpolation algorithms are used to perform interpolation on high frequency areas such as object edges or detail parts of the image, enhancing the picture quality. In addition, normal interpolation algorithms are performed on the chrominance components U, Y, such as to reduce computation complexity, improve the speed of image processing and optimize software and hardware resources for the image processing.

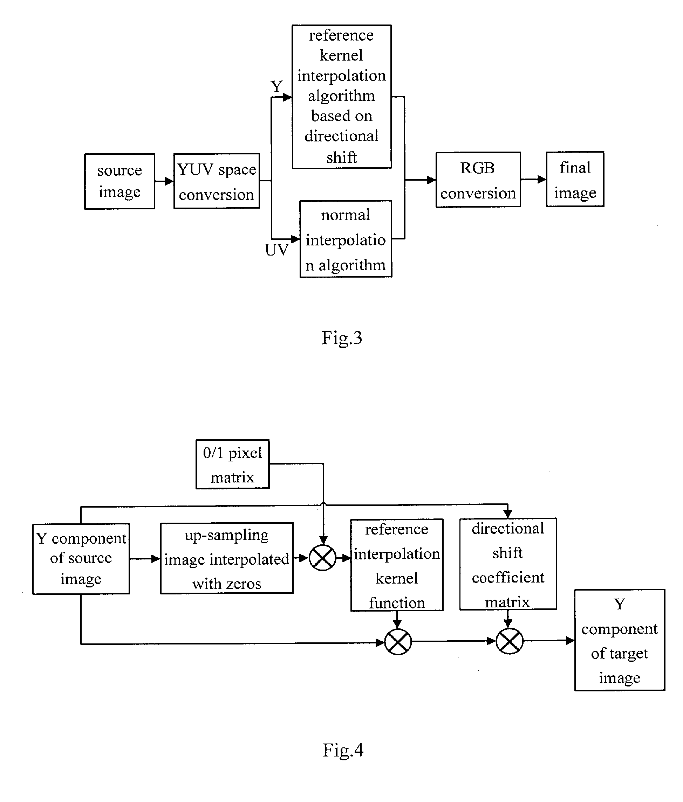

In particular, as illustrated in Fig. 3, the method comprises: performing YUV space conversion on the source image to separate the luminance component Y from the chrominance components U, V; performing the reference kernel interpolation algorithm based on directional shift on the luminance component Y to preserve details of high frequency parts such as object edges in the image, while performing normal interpolation algorithms such as the nearest neighbor interpolation, the bilinear interpolation or the bi-cubic interpolation on the chrominance components U, V; and finally converting the Y component and the U, V components as interpolated from the YUV space to the RGB space and synthesizing the components into the final image.

Naturally, depending on specific application environments, if the system software and hardware resources are sufficient, it is also possible to perform the reference kernel interpolation on both the luminance component Y and the chrominance component U, V to cause better image quality of the final image obtained by interpolated amplification.

Similarly, according to the concept of the embodiment of the present disclosure, it is also possible to perform the reference kernel interpolation algorithm based on directional shift in other color spaces such as the RGB space. The difference is that the components RGB can be operated separately and be finally synthesized into the final image. Details are omitted herein.

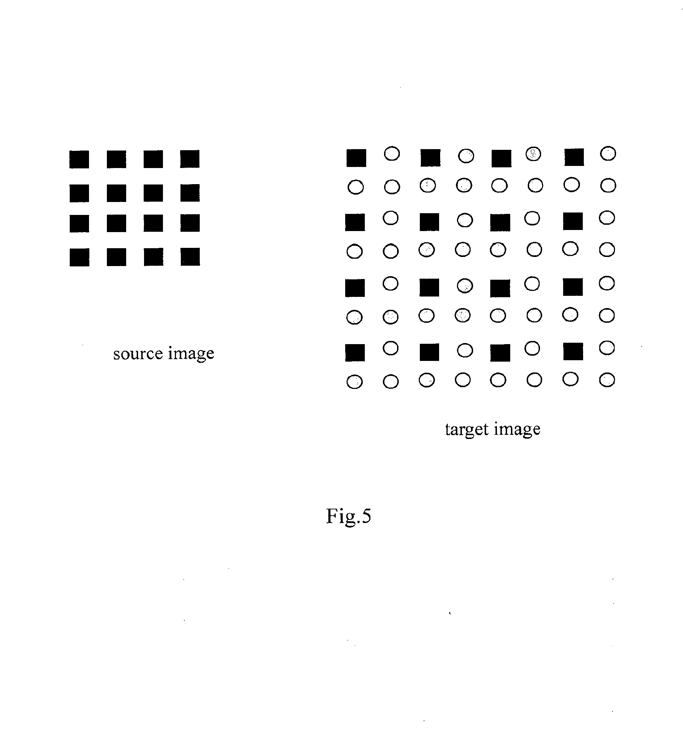

Fig. 4 is a block diagram for performing the reference kernel interpolation based on directional shift on the luminance component Y according to an embodiment of the present disclosure. As illustrated in Fig. 4, first, the separated luminance component of the pixels of the source image is interpolated with zeros to form the up-sampling image. For example, as illustrated on the left side of Fig. 5, it is possible to perform uniform interpolation with zeros on the N*N pixels of the source image to obtain a 2N*2N up-sampling image after the interpolation with zeros as illustrated on the right side of Fig. 5. On the left side of Fig. 5, description is made by taking 4*4 pixels in the source image as an example. After the above up-sampling image is obtained, a 0/1 matrix is used to convolve with it. Taking the 2N*2N up-sampling image illustrated on the right side of Fig. 5 as an example, for the pixel in the fourth column of the fourth row, a 0/1 matrix as indicated in the expression (3) can be used to convolve with it to obtain a reference interpolation kernel as indicated in the expression (4).

$$M = \begin{bmatrix} 0 & 0 & 0 & 0 & 0 & 0 & 0 & 0 \\ 0 & 0 & 0 & 0 & 0 & 0 & 0 & 0 \\ 0 & 0 & 0 & 0 & 0 & 0 & 0 & 0 \\ 0 & 0 & 0 & 1 & 0 & 0 & 0 & 0 \\ 0 & 0 & 0 & 0 & 0 & 0 & 0 & 0 \\ 0 & 0 & 0 & 0 & 0 & 0 & 0 & 0 \\ 0 & 0 & 0 & 0 & 0 & 0 & 0 & 0 \\ 0 & 0 & 0 & 0 & 0 & 0 & 0 & 0 \end{bmatrix} \qquad (3)$$

$$F = \begin{bmatrix} 0.0005 & 0.0016 & -0.0053 & -0.0203 & -0.0203 & -0.0053 & 0.0016 & 0.0005 \\ 0.0016 & 0.0049 & -0.0159 & -0.0610 & -0.0610 & -0.0159 & 0.0049 & 0.0016 \\ -0.0053 & -0.0159 & 0.0513 & 0.1965 & 0.1965 & 0.0513 & -0.0159 & -0.0053 \\ -0.0203 & -0.0610 & 0.1965 & 0.7520 & 0.7520 & 0.1965 & -0.0610 & -0.0203 \\ -0.0203 & -0.0610 & 0.1965 & 0.7520 & 0.7520 & 0.1965 & -0.0610 & -0.0203 \\ -0.0053 & -0.0159 & 0.0513 & 0.1965 & 0.1965 & 0.0513 & -0.0159 & -0.0053 \\ 0.0016 & 0.0049 & -0.0159 & -0.0610 & -0.0610 & -0.0159 & 0.0049 & 0.0016 \\ 0.0005 & 0.0016 & -0.0053 & -0.0203 & -0.0203 & -0.0053 & 0.0016 & 0.0005 \end{bmatrix}$$

$$(4)$$

Each element in the reference kernel F represents the correlation between the luminance value of the pixel in the fourth column, the fourth row in the up-sampling image as illustrated in the right side of Fig. 5 and the luminance values of the respective pixels in the image.

Then, the luminance values of the pixels of the source image are convolved with the reference interpolation kernel F to obtain the intermediate image having subjected to the reference kernel interpolation, and then, the obtained intermediate image is convolved with a directional shift coefficient matrix to obtain the luminance component of the target image.

In the embodiment of the present disclosure, considering the content characteristics and the space continuity of the source image to be interpolated, directional shift coefficients are introduced when performing the image interpolation such as to better preserve the edges of objects in the image and reduce or even eliminate the distortion phenomenon easily occurs in the high frequency parts such as the edges of the image when performing the normal interpolation.

In the above embodiment of the present disclosure, the pixels of the source image are convolved with the reference interpolation kernel first, and then their convolution result is convolved with the directional shift coefficient matrix. However, the present disclosure does not limit the order of the convolution of the above three items. In fact, according to the commutative law of convolution, it is also possible to convolve the reference interpolation kernel with the directional shift coefficient matrix first, and then convolve their convolution result with the pixels of the source image.

According to an embodiment of the present disclosure, a two-dimensional cubic interpolation convolution is decomposed into two one-dimensional cubic interpolation convolutions, that is, decomposing a two-dimensional matrix, to obtain a reference interpolation kernel in a horizontal direction and a reference interpolation kernel in a vertical direction, such that a combination can be selected more freely to meet requirements of specific interpolation effects and hardware buffer and computation complexity. As shown in the following equation (5), taking the horizontal reference interpolation kernel for convolution as an example,

$$P = \begin{bmatrix} h_A \\ h_B \\ h_C \\ h_D \end{bmatrix} \cdot [A \quad B \quad C \quad D], \qquad (5)$$

where P is the pixel to be interpolated, A, B, C and D are four pixels of the source image in the neighbor of the pixel to be interpolated, and $h_A, h_B, h_C, h_D$ are cubic polynomials of the offset w derived based on the S(w) equation, as follows:

$$\begin{cases} h_A = (-\Delta x^3 + 2\Delta x^2 - \Delta x)/2 \\ h_B = (3\Delta x^3 - 5\Delta x^2 + 2)/2 \\ h_C = (-3\Delta x^3 + 4\Delta x^2 + \Delta x)/2 \\ h_D = (\Delta x^3 - \Delta x^2)/2 \end{cases} \qquad (6)$$

Based on the similar principle, it is also possible to obtain the reference interpolation kernel $\begin{bmatrix} v_A \\ v_B \\ v_C \\ v_D \end{bmatrix}$ in the vertical direction. Details are omitted herein.

In the case of using the normal bi-cubic interpolation, the distortion occurs at the image edges or the like since the entire picture employs a fixed convolution kernel, i.e., the above cubic polynomial interpolation function s(w), when performing interpolation and convolution calculation on the source image instead of the adaptive interpolation based on the image content, for example, without considering details of high frequency areas such as object edges in the image.

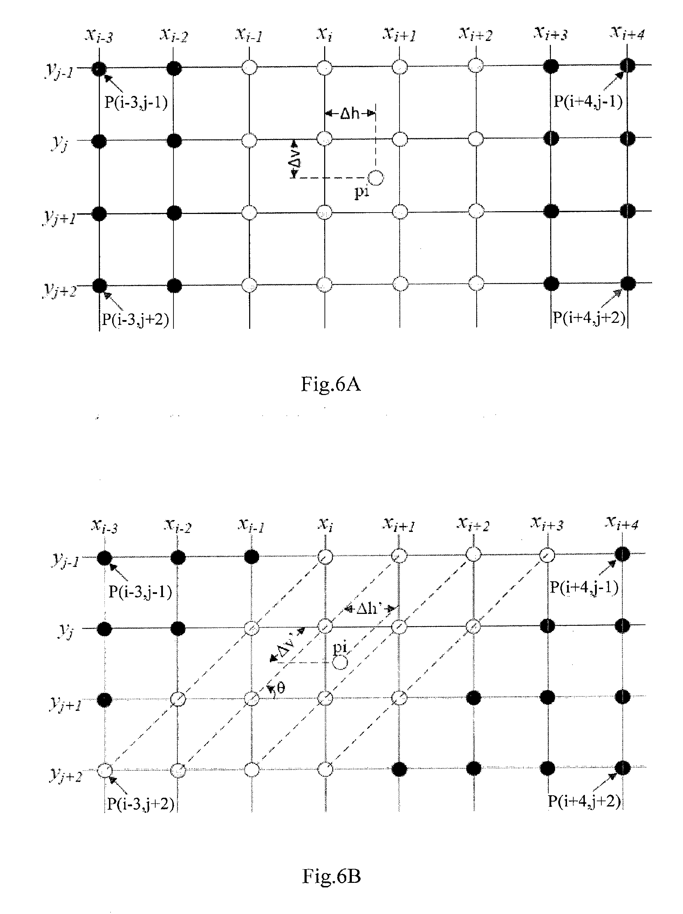

In view of the above problem, in embodiments of the present disclosure, an inclined bi-cubic interpolation can be employed based on the direction of the image edges. As illustrated in Fig. 6B, the normal bi-cubic interpolation performed in the horizontal direction and the vertical direction illustrated in Fig. 6A is modified into the inclined bi-cubic interpolation performed in a certain direction. As illustrated in Fig. 6B, considering that the offset Δh' and the offset Δv' change with the change of the directional angle $\theta$ so that the reference interpolation kernel also changes accordingly, causing the complex computation, which is disadvantageous for optimizing the image interpolation, the inventor(s) proposes introducing directional shift coefficients while remaining the reference interpolation kernel unchanged, for example,

$$D_{coe} = e^{-\mu(x\cos\theta - y\sin\theta)2}, \quad x = i - d_x - 0.5, \quad y = j - d_y - 0.5 \qquad (7)$$

where is $\mu$ is an adjustment factor in the range of 0-1 which is an experience value, when the image needs to appear more smooth, $\mu$ can be increased, or otherwise, $\mu$ can be decreased; $\theta$ is the directional angle in which the pixel currently to be interpolated is located; i, j are the coordinate positions of the pixels of the source image in the neighbor; 0.5 is the standard offset of the double interpolation; $d_x$ and $d_y$ are offsets corresponding to the direction $\theta$.

For each point to be interpolated, it is possible to obtain the directional shift coefficients of respective pixels of the source image within its neighbor, for example, the directional shift coefficients of 16 pixels around it, to form a directional shift coefficient matrix. Since the change of offset Δh' and the offset Δv' with the directional angle $\theta$ when performing the inclined bi-cubic interpolation has been reflected in the directional shift coefficient matrix, it is possible to remain the reference kernel F unchanged but convolve the luminance component of the source image with the reference kernel F to obtain an intermediate image having subjected to the reference kernel interpolation, and then convolve the intermediate image with the above directional shift coefficient matrix to obtain the luminance component of the final image having subjected to the inclined bi-cubic interpolation in a certain direction.

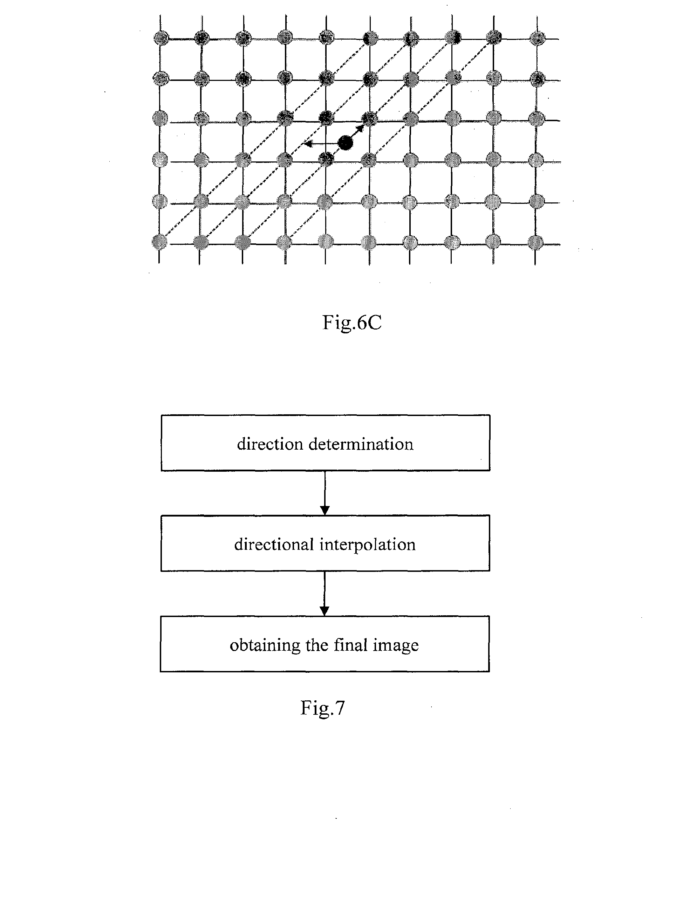

In the example illustrated in Fig. 6B, both in the horizontal direction and in the inclined direction of angle $\theta$ with respect to the horizontal direction, 4 pixels of the source image around the pixel to be interpolated are used to perform bi-cubic interpolation. In fact, since precision requirement of related pixels along the edge direction is high, if the filtering intensity is too large (that is, too many pixels are involved in the interpolation), it is easy to cause misjudgment of interpolation points of edge pixels, but if the filtering intensity is too small (that is, too few pixels are involved in the interpolation), visible sawtooth phenomenon will occur. Therefore, according to an embodiment of the present disclosure, it is possible to use different number of pixels for interpolation in the horizontal direction and in the vertical direction to meet higher precision of interpolation along the edge direction. For example, as illustrated in Fig. 6C, when it is needed to perform interpolation in the direction of 45° with respect to the horizontal direction, a small interpolation kernel is used in the horizontal direction, and a large interpolation kernel is used in the vertical direction. For example, 4 pixels are used in the horizontal direction and 6 pixels are used in the vertical direction, to perform the interpolation with better edge preservation.

Optionally, in order to preserve details such as edges existing in the source image as many as possible when performing interpolating amplification on the image, it is needed to determine edge directions to facilitate the processing of preserving the edges. For example, as illustrated in Fig. 7, it is possible to determine the direction first and then perform the directional interpolation. For example, it is possible to use a gradient operator such as Sobel operator, Roberts operator, Canny operator, or Laplacian operator to detect edges existing in the source image. The direction of edges is judged to determine the directions of the edges. Finally, directional interpolation is performed based on the determined edge direction. For example, the obtained two-dimensional reference interpolation kernel is decomposed to derive a horizontal interpolation kernel and a vertical interpolation kernel, and the horizontal interpolation kernel and the vertical interpolation kernel are angularly rotated in the direction in which the pixel to be interpolated is located, that is, the reference interpolation kernel is convolved with the directional shift coefficient matrix and then convolved with the neighbor pixels of the source image around the pixel to be interpolated to obtain the final image.

Optionally, pre-processing of the edge detection is usually necessary, in other words, it is necessary to perform Gaussian filtering before determining the direction. According to an embodiment of the present disclosure, before the edges are detected, Gaussian filtering is performed to eliminate white noise caused by the camera and restrain the disturbance on the edge determination. However, the original pixels are still used for interpolation, so that no blurring problem occurs in the entire process.

Optionally, when determining the edge direction, the direction in which the pixel to be interpolated should be interpolated is obtained by determining correlation of each direction, and in this direction, the directional angle $\theta$, the shift, i.e., the offset between the pixel to be interpolated and the surrounding pixels, and the luminance values of the surrounding pixels are used to derive the above directional shift coefficient matrix. The directional shift coefficient matrix can be transformed in real time with the direction to determine better image interpolation effect.

According to an embodiment of the present disclosure, it can be considered that as many directions as possible can be added in the determination to improve the precision of the image interpolation. For that, a lookup table can be designed to simplify computation and improve the image interpolation processing speed. Thereby, when performing along the edge, it is only needed to refer to a corresponding lookup table to obtain each element of the directional shift coefficient matrix $D_{coe}$. For example, it is possible to configure data in the lookup table freely based on the requirement of picture quality. For instance, the column represents each direction, and the row represents the corresponding offset. For example, direction 1 is set as 45°, and its corresponding offset is $(d_{x1},d_{y1})$; direction 2 is set as 90°, and its corresponding offset is $(d_{x2},d_{y2})$, and so on. Thereby, the directional shift coefficient matrix $D_{coe}$ is obtained, reducing the amount of computation and increasing the computation speed.

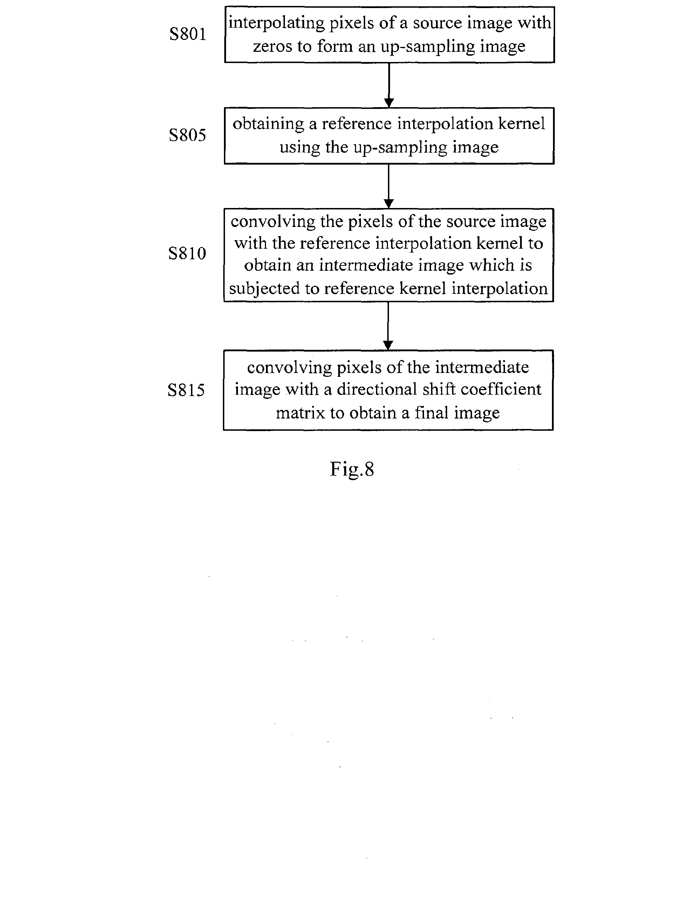

According to an embodiment of the present disclosure, there is provided an image interpolation method. As illustrated in Fig. 8, the image interpolation method comprises: S801 of interpolating pixels of a source image with zeros to form an up-sampling image; S805 of obtaining a reference interpolation kernel using the up-sampling image; S810 of convolving the pixels of the source image with the reference interpolation kernel to obtain an intermediate image having subjected to reference kernel interpolation; and S815 of convolving pixels of the intermediate image with a directional shift coefficient matrix to obtain a final image.

As described in the above, in Fig. 8, the pixels of the source image are convolved with the reference interpolation kernel first, and then their convolution result is convolved with the directional shift coefficient matrix to obtain the final image. However, the present disclosure does not limit the order of the convolution of the above three items. In fact, according to the commutative law of convolution, it is also possible to convolve the reference interpolation kernel with the directional shift coefficient matrix first, and then convolve their convolution result with the pixels of the source image, without affecting the implementation of the concept of the present disclosure.

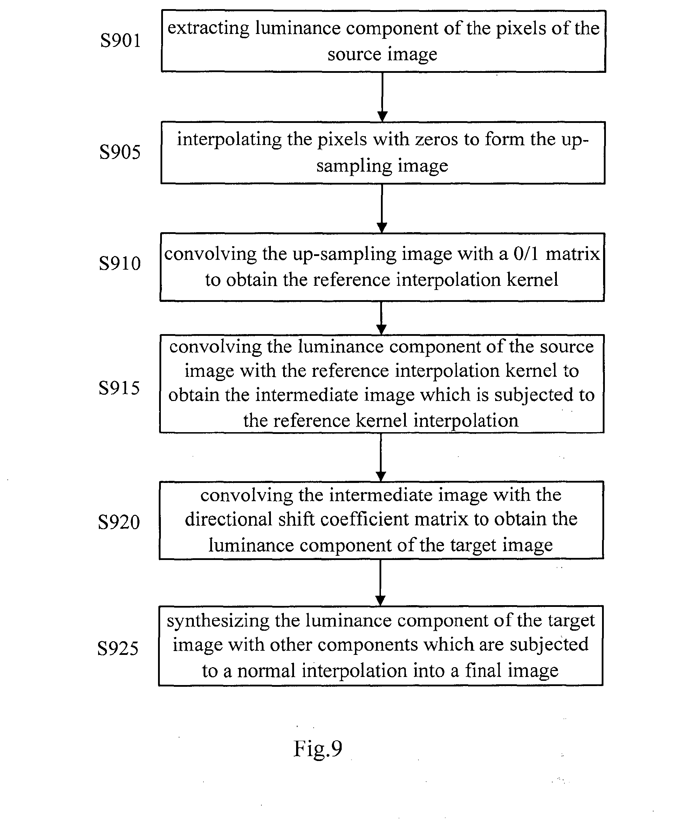

As described in the above, considering human eyes are more sensitive to luminance than chrominance, according to another embodiment of the present disclosure, the reference kernel interpolation based on directional shift is only performed on the luminance component Y of the pixels of the source image, and the normal interpolation is performed on the chrominance components U, V. In particular, according to this embodiment, as illustrated in Fig. 9, the image interpolation method comprises: a step S901 of extracting luminance component of the pixels of the source image; a step S905 of interpolating the luminance component of the pixels of the source image with zeros to form the up-sampling image; a step S910 of convolving the up-sampling image with a 0/1 matrix to obtain the reference interpolation kernel; a step S915 of convolving the luminance component of the source image with the reference interpolation kernel to obtain the intermediate image having subjected to the reference kernel interpolation; a step S920 of convolving the intermediate image with the directional shift coefficient matrix to obtain the luminance component of the target image; and a step S925 of synthesizing the luminance component of the target image with other components which are subjected to the normal interpolation into a final image.

As an example, in Fig. 9, the luminance component of the pixels of the source image is convolved with the reference interpolation kernel first, and then their convolution result is convolved with the directional shift coefficient matrix to obtain the final image. However, the present disclosure does not limit the order of the convolution of the above three items. In fact, according to the commutative law of convolution, it is also possible to convolve the reference interpolation kernel with the directional shift coefficient matrix first, and then to convolve their convolution result with the luminance components of the pixels of the source image, without affecting the implementation of the concept of the present disclosure.

Optionally, the above step S901 comprises: performing YUV space conversion on the source image to separate luminance component Y from chrominance components UV of the pixels of the source image so as to obtain the luminance component of the pixels of the source image.

Optionally, the method further comprises: determining direction of an edge existing in the source image in order to interpolate the pixel along the determined direction.

Optionally, in the above method, before determining the direction of the edge, Gaussian filtering is performed on the pixels of the source image to remove the white noise in the source image.

Optionally, the method further comprises: changing the direction, transforming the directional shift coefficient matrix and comparing the obtained final images to optimize the display effect.

Optionally, the method further comprises: decomposing the reference interpolation kernel to obtain one-dimensional horizontal interpolation kernel and vertical interpolation kernel; and convolving the luminance component of the pixels of the source image with the horizontal interpolation kernel and the vertical interpolation kernel respectively.

Optionally, the method further comprises: performing angular rotation on the horizontal interpolation kernel and the vertical interpolation kernel in the direction in which the pixel to be interpolated is located, and convolving the rotated horizontal interpolation kernel and the vertical interpolation kernel with the luminance component of neighbor pixels of the source image around the pixel to be interpolated respectively.

Optionally, the method further comprises: selecting different number of neighbor pixels of the source image for interpolation in the horizontal direction and the vertical direction, so as to employ different filtering intensities in the horizontal direction and the vertical direction.

Optionally, the method further comprises: performing the normal interpolation on the separated UV components, wherein the normal interpolation comprises but not limited to the nearest interpolation, the bilinear interpolation or the bi-cubic interpolation.

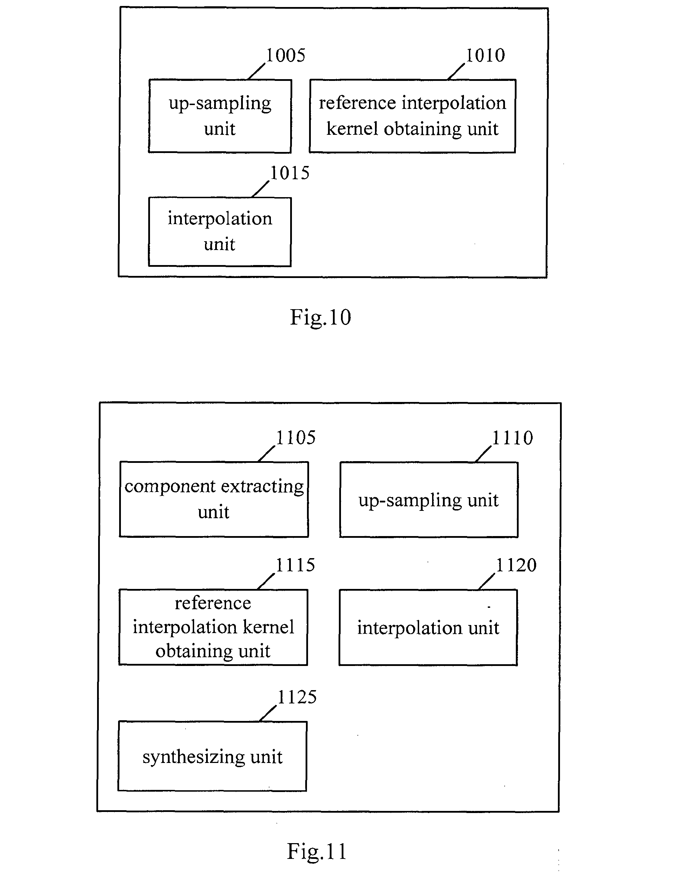

According to another embodiment, there is also provided an image interpolation apparatus. As illustrated in Fig. 10, the image interpolation apparatus can comprise: an up-sampling unit 1005 for interpolating pixels of a source image with zeros to form an up-sampling image; a reference interpolation kernel obtaining unit 1010 for derive a reference interpolation kernel using the up-sampling image; and an interpolation unit 1015 for convolving the pixels of the source image, the reference interpolation kernel and a directional shift coefficient matrix to perform reference kernel interpolation based on directional shift on the source image.

As described in the above, considering human eyes are more sensitive to luminance than chrominance, according to another embodiment of the present disclosure, the reference kernel interpolation based on directional shift is only performed on the luminance component Y of the pixels of the source image, and the normal interpolation is performed on the chrominance components U, V. Thereby, according to an embodiment of the present disclosure, there is provided an image interpolation apparatus. As illustrated in Fig. 11, the image interpolation apparatus can comprise: a component extracting unit 1105 for extracting a first component of the pixels of the source image; an up-sampling unit 1110 configured to interpolate the first component of the pixels of the source image with zeros to form an up-sampling image; a reference interpolation kernel obtaining unit 1115 configured to convolve the above up-sampling image with a 0/1 matrix to obtain the reference interpolation kernel; an interpolation unit 1120 configured to convolve any two of the first component of the pixels of the source image, the reference interpolation kernel and the directional shift coefficient matrix to obtain an intermediate result, and convolve the obtained intermediate result with the remaining one of the first component of the pixels of the source image, the reference interpolation kernel and the directional shift coefficient matrix to obtain the first component of pixels of a target image; and a synthesizer unit 1125 configured to synthesize the first component of the pixels of the target image with other components which are subjected to the normal interpolation to a final image.

Optionally, the above image interpolation apparatus further comprises: a color space converting unit for performing YUV color space conversion on the source image to separate luminance component Y from chrominance components UV.

Optionally, the above image interpolation apparatus further comprises: an edge direction determining unit for determining direction of an edge existing in the source image in order to interpolate the pixel along the determined direction.

Optionally, the above image interpolation apparatus further comprises: a filtering unit for performing Gaussian filtering on the pixels of the source image before determining the direction of the edge to eliminate the white noise which is introduced when the source image is shot.

Optionally, the above image interpolation apparatus further comprises: a dimension transforming unit for decomposing the reference interpolation kernel to obtain one-dimensional horizontal interpolation kernel and vertical interpolation kernel in order to convolve the luminance component of the pixels of the source image with the horizontal interpolation kernel and the vertical interpolation kernel respectively.

Optionally, the above image interpolation apparatus further comprises: an angle rotation unit for performing angular rotation on the horizontal interpolation kernel and the vertical interpolation kernel in the direction in which the pixel to be interpolated is located in order to convolve the rotated horizontal interpolation kernel and the vertical interpolation kernel with the luminance component of neighbor pixels of the source image around the pixel to be interpolated respectively.

Optionally, the above image interpolation apparatus further comprises: an angle rotation unit for performing angular rotation on the result obtained by convolving the luminance component of neighbor pixels of the source image around a pixel to be interpolated with the horizontal interpolation kernel and the vertical interpolation kernel respectively in the direction in which the pixel to be interpolated is located.

Optionally, the above image interpolation apparatus further comprises: a direction adjusting unit for changing the direction to transform the directional shift coefficient matrix in order to obtain an optimized interpolated image.

According to the image interpolation method and the image interpolation apparatus provided by embodiments of the present disclosure, based on the inclined bi-cubic interpolation, a directional shift matrix is introduced to remain the reference interpolation kernel unchanged while transforming the shift convolution matrix based on the direction, which is advantageous to optimize the interpolated image in various directions, such that continuity of the image content is considered and distortion is avoided at high frequency parts and details such as the edges of the image. In addition, considering that human eyes are more sensitive to luminance than chrominance, according to the image interpolation method and the image interpolation apparatus provided by another embodiment of the present disclosure, the reference kernel interpolation based on directional shift can be performed only on the luminance component of the pixels of the source image, and the normal interpolation is performed on the chrominance components, reducing computation complexity and reducing the requirement on the software and hardware resources of the image processing system.

The above description is only specific implementation of the present disclosure, but the protection scope of the present invention is not limited thereto. Changes or replacements that can be easily conceived by those skilled in the art in the technical scope disclosed by embodiments of the present disclosure should all fall within the protection scope of the present invention. Therefore, the protection scope of the present invention should be defined by the claims.

## Claims

1. An image interpolation method comprising:

    interpolating pixels of a source image with zeros to form an up-sampling image;
    obtaining a reference interpolation kernel using the up-sampling image; and
    convolving the pixels of the source image, the reference interpolation kernel and a directional shift coefficient matrix to perform a reference kernel interpolation based on directional shift on the source image.

2. The image interpolation method according to claim 1, comprising:

    extracting a first component of the pixels of the source image;
    interpolating the first component of the pixels of the source image with zeros to form the up-sampling image;
    convolving the up-sampling image with a 0/1 matrix to obtain the reference interpolation kernel;
    convolving any two of the first component of the pixels of the source image, the reference interpolation kernel and the directional shift coefficient matrix to obtain an intermediate result;
    convolving the obtained intermediate result with the remaining one of the first component of the pixels of the source image, the reference interpolation kernel and the directional shift coefficient matrix to obtain the first component of pixels of a target image; and
    synthesizing the first component of the pixels of the target image with ether components which are subjected to a normal interpolation into a final image.

3. The image interpolation method according to claim 2, wherein the first component is a luminance component Y, and the other components are chrominance components UV, and the image interpolation method further comprises:

    performing YUV space conversion on the source image to separate the luminance component Y from the chrominance components UV so as to obtain the luminance component of the pixels of the source image.

4. The image interpolation method according to any one of claims 1-3, further comprising:

    determining direction of an edge existing in the source image in order to interpolate along the determined direction.

5. The image interpolation method according to claim 4, further comprising:

    before determining the direction of the edge, performing Gaussian filtering on the pixels of the source image to eliminate white noise in the source image.

6. The image interpolation method according to any one of claims 1-5, further comprising:

changing the direction, transforming the directional shift coefficient matrix and comparing the obtained final images to optimize the display effect.

7. The image interpolation method according to any one of claims 1-6, further comprising:

decomposing the reference interpolation kernel to obtain one-dimensional horizontal interpolation kernel and vertical interpolation kernel.

8. The image interpolation method according to claim 7, further comprising:

convolving the first component of neighbor pixels of the source image around a pixel to be interpolated with the horizontal interpolation kernel and the vertical interpolation kernel respectively, and then performing angular rotation in the direction in which the pixel to be interpolated is located.

9. The image interpolation method according to claim 7, further comprising:

performing angular rotation on the horizontal interpolation kernel and the vertical interpolation kernel in the direction in which a pixel to be interpolated is located, and then convolving the rotated horizontal interpolation kernel and the vertical interpolation kernel with the first component of neighbor pixels of the source image around the pixel to be interpolated respectively.

10. The image interpolation method according to any one of claims 1-9, further comprising:

selecting different number of neighbor pixels of the source image for interpolation in the horizontal direction and the vertical direction, so as to employ different filtering intensities in the horizontal direction and the vertical direction.

11. An image interpolation apparatus comprising:

an up-sampling unit configured to interpolate pixels of a source image with zeros to form an up-sampling image;
a reference interpolation kernel obtaining unit configured to obtain a reference interpolation kernel using the up-sampling image; and
an interpolation unit configured to convolve the pixels of the source image, the reference interpolation kernel and a directional shift coefficient matrix to perform reference kernel interpolation based on directional shift on the source image.

12. The image interpolation apparatus according to claim 11, further comprising a component extracting unit configured to extract a first component of the pixels of the source image,
wherein the up-sampling unit is configured to interpolate the first component of the pixels of the source image with zeros to form the up-sampling image; the reference interpolation kernel obtaining unit is configured to convolve the up-sampling image with a 0/1 matrix to obtain the reference interpolation kernel; the interpolation unit is configured to convolve any two of the first component of the pixels of the source image, the reference interpolation kernel and the directional shift coefficient matrix to obtain an intermediate result, and convolve the obtained intermediate result with the remaining one of the first component of the pixels of the source image, the reference interpolation kernel and the directional shift coefficient matrix to obtain the first component of pixels of a target image; and
wherein the image interpolation apparatus further comprises a synthesizer unit configured to synthesize the first component of the pixels of the target image with other components which are subjected to a normal interpolation to a final image.

13. The image interpolation apparatus according to claim 12, wherein the first component is a luminance component Y, and the other components are chrominance components UV, and the image interpolation apparatus further comprises:

a color space converting unit configured to perform YUV color space conversion on the source image to separate the luminance component Y from the chrominance components UV so as to obtain the luminance component of the pixels of the source image.

14. The image interpolation apparatus according to any one of claims 11-13, further comprising:

a dimension transforming unit configured to decompose the reference interpolation kernel to obtain one-dimensional horizontal interpolation kernel and vertical interpolation kernel; and
an angle rotation unit configured to perform angular rotation on the result obtained by convolving the first component of neighbor pixels of the source image around a pixel to be interpolated with the horizontal interpolation kernel and the vertical interpolation kernel respectively in a direction in which the pixel to be interpolated is located.

15. The image interpolation apparatus according to any one of claims 11-13, further comprising:

a dimension transforming unit configured to decompose the reference interpolation kernel to obtain one-dimensional horizontal interpolation kernel and vertical interpolation kernel; and
an angle rotation unit configured to perform angular rotation on the horizontal interpolation kernel and the vertical interpolation kernel in a direction in which a pixel to be interpolated is located, and then to convolve the rotated horizontal interpolation kernel and the vertical interpolation kernel with the first component of neighbor pixels of the source image around the pixel to be interpolated respectively.

Fig.1A

Fig.1B

(i-1,j-1)

(i,j)

U

V

(x,y)

(i+2,j+2)

Fig.1C

| extracting pixel gray level values | up-sampling by interpolation with zero | obtaining the reference interpolation kernel | using the reference interpolation kernel to interpolate pixels | performing directional shift |

Fig.2

Fig.3

Fig.4

source image

target image

Fig.5

Fig.6A

Fig.6B

Fig.6C

Fig.7

S801 | interpolating pixels of a source image with zeros to form an up-sampling image

S805 | obtaining a reference interpolation kernel using the up-sampling image

S810 | convolving the pixels of the source image with the reference interpolation kernel to obtain an intermediate image which is subjected to reference kernel interpolation

S815 | convolving pixels of the intermediate image with a directional shift coefficient matrix to obtain a final image

Fig.8

S901 | extracting luminance component of the pixels of the source image

S905 | interpolating the pixels with zeros to form the up-sampling image

S910 | convolving the up-sampling image with a 0/1 matrix to obtain the reference interpolation kernel

S915 | convolving the luminance component of the source image with the reference interpolation kernel to obtain the intermediate image which is subjected to the reference kernel interpolation

S920 | convolving the intermediate image with the directional shift coefficient matrix to obtain the luminance component of the target image

S925 | synthesizing the luminance component of the target image with other components which are subjected to a normal interpolation into a final image

Fig.9

Fig.10

Fig.11